# EUROPÄISCHE PATENTANMELDUNG

(11) **EP 3 144 463 A1**
(43) Veröffentlichungstag der Anmeldung: **22.03.2017**
(21) Anmeldenummer: 16002025.1
(22) Anmeldetag: 18.09.2016
(51) Int. Cl.: E06B 9/00, B23K 37/00, B23K 26/00, E06B 9/68, F16P 1/00

(54) **SCHUTZEINRICHTUNG ZUM VERHINDERN DES DURCHTRETENS VON LASERSTRAHLUNG DURCH GEBÄUDEÖFFNUNGEN**

(30) Priorität: 18.09.2015 DE 102015115845
(71) Anmelder: ITW Industrietore GmbH, 73072 Donzdorf (DE)
(72) Erfinder: DRESSLER, Hans-Jürgen, 73072 Donzdorf (DE)
(74) Vertreter: Fürst, Siegfried

(57) **Zusammenfassung**

Erfindungsgemäß ist ein roll- oder faltbare Tor (2.1, 2.2) ausgestattet mit Mitteln zum Verhindern des Durchdringens von Laserstrahlung (4.1, 4.2) und demzufolge durch eine mit dem Tor (2.1, 2.2) verschlossene Gebäudeöffnung.

Diesbezüglich ist in das Tor eine Sensoranordnung integriert, die zwecks Signalisierung auftreffender Laserstrahlung (4.1, 4.2) mit einer Mess- und Steuereinrichtung (10) in Verbindung steht, die Mess- und Steuereinrichtung (10) zur Ausgabe eines Steuersignals in Abhängigkeit von auftreffender Laserstrahlung (4.1, 4.2) ausgebildet ist, und das Steuersignal vorzugsweise zur Abschaltung der Laserstrahlungsquelle (6) vorgesehen ist.

## Beschreibung

Die Erfindung bezieht sich auf eine Schutzeinrichtung zum Verhindern des Durchtretens von Laserstrahlung durch begeh- oder befahrbare Gebäudeöffnungen, insbesondere auf ein roll- oder faltbares Tor zum zeitweiligen Verschließen von Gebäudeöffnungen vorzugsweise in Bereichen der industriellen Fertigung.

In Gebäuden für moderne industrielle Fertigungslinien gewährleisten Tore einen unkomplizierten Zugang zu Maschinen und Fertigungsanlagen. Häufig werden die Tore dabei so in den Fertigungsablauf integriert, dass sie - automatisch gesteuert - Durchgänge zwischen einzelnen Fertigungsräumen öffnen und schließen. Das ermöglicht mit verhältnismäßig hoher Sicherheit einen Wechsel zwischen der vollständigen Abschottung eines Fertigungsraumes einerseits und dem freien Durchgang für den Transport von Werkstücken andererseits.

Im Stand der Technik wird damit neben der zeitlichen Optimierung des Fertigungsablaufs beispielsweise auch für eine weitestgehend gleichbleibende Temperatur in dem betreffenden Fertigungsraum gesorgt.

Mit der zunehmenden Anzahl von Laser-Anwendungen in der Industrie gewinnt allerdings auch das Thema Sicherheit und Arbeitsschutz im Hinblick auf das Verschließen der Durchgänge immer mehr an Bedeutung, vor allem dann, wenn die verwendeten Laser aufgrund der Charakteristik der abgegebenen Strahlung unbeabsichtigt biologische oder auch anderweitige Schäden verursachen können. So kann es bei unkontrollierter Strahlungsrichtung auch weit außerhalb des Fokus der Strahlung zur Zerstörung von Geräten und zu Bränden kommen.

Das gilt insbesondere für Laser der Klassen 3R, 3B und 4 gemäß Klassifizierung nach DIN EN 60825-1. Für diese Klassen sind Schutzmaßnahmen nicht nur bezüglich direkt gerichteter, sondern auch hinsichtlich gerichtet reflektierter und diffus reflektierter Strahlung zu berücksichtigen. Vorzugsweise sind hierzu auch bereits die Laser der weniger gefährdenden Klassen 2 und 2M einzubeziehen.

So besteht beispielsweise bei Verwendung von Lasern in Fertigungsräumen, die mit Toren geschlossen sind, die Gefährdung durch Laserstrahlung, die aufgrund von Fehlsteuerung der Strahlungsquelle oder aufgrund von am Werkstück reflektierter Strahlung unbeabsichtigt auf das Tor gerichtet ist und das Tor nach außen durchdringen könnte.

Davon ausgehend liegt der Erfindung die Aufgabe zugrunde, Tore der eingangs genannten Art so weiterzubilden, dass die Gefahr von Schäden aufgrund des Durchtretens von Laserstrahlung durch das Tor vermieden ist.

Erfindungsgemäß ist vorgesehen, dass ein roll- oder faltbares Tor ausgestattet ist mit Mitteln zum Verhindern des Durchtretens von Laserstrahlung durch das Tor und damit auch durch die mit dem Tor verschlossene Gebäudeöffnung.

Diesbezüglich weist das Tor eine Sensoranordnung auf, die zur Registrierung auftreffender Laserstrahlung und zur Signalisierung des Auftreffens von Laserstrahlung an eine Mess- und Steuereinrichtung ausgebildet ist. Die Mess- und Steuereinrichtung ist ausgangsseitig mit einer Steuereinrichtung für die Laserstrahlungsquelle verbunden, und zwar vorrangig zum Zweck der unmittelbaren Abschaltung der Laserstrahlungsquelle. Alternativ ist die Verwendung eines von der Mess- und Steuereinrichtung ausgehenden Steuersignals zum Zwischenschalten eines Shutters in die Laserstrahlung zwischen Laserstrahlungsquelle und Tor vorgesehen, um so das Auftreffen auf das Tor zu unterbinden. In beiden Fällen wird erreicht, dass nach Auftreffen von Laserstrahlung auf die Innenseite des Tores die Gefahr des Durchdringens behoben und die Entstehung von Schäden außerhalb des Tores vermieden ist.

In einer ersten Ausführungsvariante der Sensoranordnung umfasst diese vorzugsweise zwei in das Tor integrierte stromdurchflossene Leiterbahnen sowie eine die Leiterbahnen voneinander nichtleitend trennende dielektrische Zwischenschicht. Die beiden jeweils einen Stromkreis bildenden Leiterbahnen stehen sich beidseitig der nichtleitenden Zwischenschicht gegenüber. Trifft Laserstrahlung auf das Tor, führt der damit verbundene Energieeintrag zur Veränderung des Leitwertes der nichtleitenden Zwischenschicht, infolge dessen wird diese leitend und es kommt zu einem Spannungsdurchschlag von Leiterbahn zu Leiterbahn und/oder zur Aufhebung der Leitfähigkeit mindestens einer der Leiterbahnen und damit zu einer Unterbrechung des Stromflusses.

In einer zweiten Ausführungsvariante besteht die Sensoranordnung aus nur einer stromdurchflossenen Leiterbahn. Trifft Laserstrahlung auf das Tor, führt der damit verbundene Energieeintrag zur Aufhebung der Leitfähigkeit der Leiterbahn und damit zur Unterbrechung des Stromflusses.

In beiden Ausführungsvarianten definiert der durch die Leiterbahnen fließende Strom eine elektrische Charakteristik der Sensoranordnung, wobei die Vorgabe einer anzulegenden Spannung bzw. des zu fließenden Stromes durch die Mess- und Steuereinrichtung erfolgt. Die Mess- und Steuereinrichtung ist zugleich zur permanenten Kontrolle dieser elektrischen Charakteristik vorgesehen. Sowohl bei einem Spannungsdurchschlag von Leiterbahn zu Leiterbahn als auch bei einer Aufhebung der Leitfähigkeit einer Leiterbahn tritt eine Veränderung der elektrischen Charakteristik ein, die unmittelbar die Ausgabe des Steuersignals durch die Mess- und Steuereinrichtung zur Folge hat.

In den Erfindungsgedanken eingeschlossen ist auch eine Sensoranordnung mit mehr als zwei Leiterbahnen, die in Form eines zweidimensionalen Diskretisierungsgitters angeordnet sind, das beispielsweise zur Bestimmung des Auftreffortes der Laserstrahlung auf das Tor nutzbar ist. Damit ist es möglich, das Steuersignal zur Veranlassung einer Richtungskorrektur der Laserstrahlung in Abhängigkeit vom Auftreffort und damit zur Gefahrenbeseitigung zu nutzen. Das Diskretisierungsgitter entspricht einer gekreuzten Führung einer Vielzahl mittels der nichtleitenden Zwischenschicht voneinander isolierter Leiterbahnen, wobei jeder Kreuzungspunkt einen bestimmten Ort des Tores definiert.

Die isolierende Zwischenschicht besteht beispielsweise aus Materialien wie Polyamid, PET, Polypropylen oder Polycarbonat, die unter Lasereinwirkung leitend werden oder verdampfen. Die Leiterbahnen bestehen vorzugsweise aus Kupfer. Die maßliche Dimensionierung der Leitungsbahnen und der nichtleitenden Zwischenschicht sind jeweils auf den maximal zulässigen Energieeintrag abgestimmt.

Unter dem Begriff roll- oder faltbares Tor sind im Zusammenhang mit der vorliegenden Erfindung insbesondere Rolltore und Falttore in herkömmlicher Bauweise zu verstehen, im weiteren Sinne aber beispielsweise auch Schnelllauftore, Spiraltore, Falthebetore und Sektionaltore.

Im Rahmen der Erfindung liegt es auch, das von der Mess- und Steuereinrichtung ausgegebene Steuersignal alternativ oder zusätzlich zur Abschaltung der Laserstrahlungsquelle oder zur Zwischenschaltung eines Shutters zur Auslösung eines akustischen oder anderweitig sinnlich wahrnehmbaren Alarmsignals zu nutzen.

In den Erfindungsgedanken eingeschlossen ist auch eine Ausführungsvariante, nach der das Torblatt bzw. der Torbehang, also die vertikalen Segmente oder die horizontalen Segmente/Lamellen oder der flexible Behang des Tores, aus mehreren Materialschichten oder mehreren Bauteilschichten besteht, wobei wenigstens eine der Teilschichten eine Laserlicht streuende Schicht oder eine lichtabsorbierende Schicht ist. Es können auch beide dieser Teilschichten vorhanden sein.

Die Laserlicht streuende Teilschicht ist z.B. ein gewirktes oder mehrlagiges Gewebe. Vorzugsweise ist dieses Gewebe ein nicht brennbares textiles Flächengebilde, welches z.B. aus anorganischen oder/und organischen, nicht brennbaren Fasern besteht.

Die lichtabsorbierende Schicht ist z.B. eine optische Filterschicht, welche das von dem gewirkten oder mehrlagigen Gewebe gestreute Rest-Laserlicht absorbiert. Am oder im Torblatt bzw. am oder im Torbehang ist die lichtabsorbierende Schicht so angeordnet, dass sie nicht die erste Schicht ist, auf welche die Laserstrahlung trifft.

Nach einem weiteren Ausführungsbeispiel besteht bei einem Torblatt, welches z.B. bei einem Falttor bzw. einem SektionalTor aus mehreren Torsegmenten bzw. aus mehreren Lamellen zusammengesetzt ist, die Laserlicht streuende Teilschicht aus mehreren mattenförmigen, kachelförmigen, paneelförmigen oder plattenförmigen Teilkörpern, deren Randbereiche ein Verriegelungsprofil aufweist. Bei geschlossenem Torblatt bilden die Teilkörper eine durchgehende, geschlossene Oberfläche. Diese Licht streuende Schicht ist so an dem Torblatt angeordnet, dass sie der Laserquelle zugewandt ist.

In den Erfindungsgedanken ist weiterhin eingeschlossen, dass nach einer Ausführungsvariante bei einem mehrschichtigen Aufbau des Torblattes bzw. des Torbehanges die jeweiligen Materialschichten bzw. Bauteilschichten jeweils separate vertikale Segmente oder separate horizontale Lamellen oder separate flexible Behänge sind, welche zwangsgekoppelt sind, vorzugsweise mechanisch oder elektromechanisch, und in Abhängigkeit voneinander bewegt werden, d.h. in der Regel geöffnet oder geschlossen werden. Dieses Öffnen oder Schließen kann zeitlich parallel oder zeitlich versetzt, jedoch unmittelbar nacheinander, erfolgen.

Die Erfindung wird nachfolgend anhand von schematisch in Zeichnungen dargestellten Ausführungsbeispielen näher erläutert, welche die Erfindung jedoch nicht einschränken. Es zeigen:
- Fig.1 a und 1 b: Gefährdungssituationen bei der Bearbeitung von Werkstücken mittels Laserstrahlung;
- Fig.2a und 2b: eine Sensoranordnung aus stromdurchflossenen Leiterbahnen und einer nichtleitenden Zwischenschicht, und
- Fig.3a und 3b: eine Sensoranordnung mit Leiterbahnen in Form eines Diskretisierungsgitters.

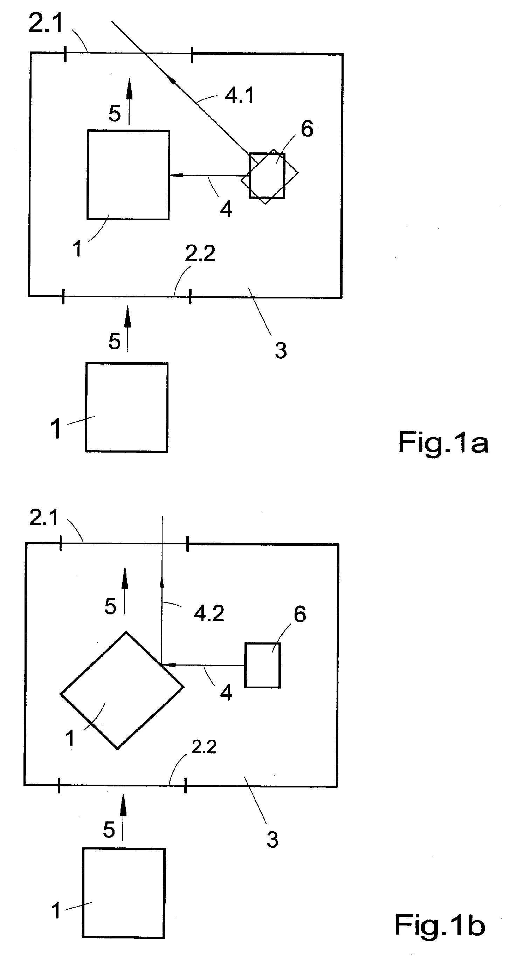

In den Figuren 1 a und 1 b sind zwei Beispiele für Gefährdungssitationen bei der Bearbeitung von Werkstücken 1 mittels Laserstrahlung 4 innerhalb eines Fertigungsraumes 3 dargestellt, der zwei Öffnungen aufweist, die durch Tore 2.1, 2.2 verschlossen sind. Die Pfeile 5 verweisen auf die Transportrichtung der Werkstücke 1 in einem angenommenen Fertigungsprozess.

Fig.1a zeigt ein in Bearbeitung befindliches Werkstück 1 mit korrekter Ausrichtung in Relation zu einer Laserstrahlungsquelle 6, von der die Laserstrahlung 4 ausgeht und auf das Werkstück 1 trifft. Eine Gefahr besteht in einer Fehlsteuerung der Laserquelle 6, bei der dann beispielsweise Laserstrahlung 4.1 auf das Tor 2.1 gerichtet ist.

Anders als in Fig.1 a erfolgt in dem Ausführungsbeispiel nach der Fig.1b zwar die Steuerung der Laserstrahlungsquelle 6 korrekt und die Laserstrahlung 4 trifft wie beabsichtigt auf das zu bearbeitende Werkstück 1, jedoch führt hier eine Fehlausrichtung des Werkstücks 1 dazu, dass ein reflektierter Strahlungsanteil 4.2 auf das Tor .1 gerichtet ist.

Um zu verhindern, dass in den dargestellten Situationen die Laserstrahlung 4.1 oder der Strahlungsanteil 4.2 außerhalb des Fertigungsraumes 3 Schäden verursachen kann, sind die Tore 2.1 und 2.2 erfindungsgemäß mit Mitteln zum Verhindern des Durchdringens der Laserstrahlung 4.1 bzw. des Strahlungsanteils 4.2 ausgestattet, die nachfolgend erläutert werden.

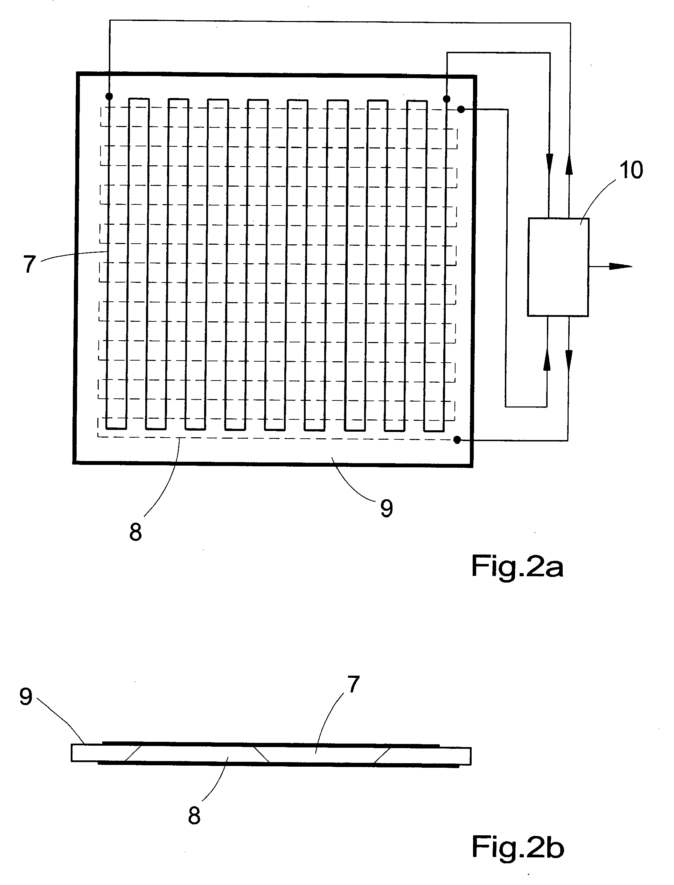

Das in den Fig. 2a und 2b dargestellte Beispiel zeigt eine zur Integration in das Tor 2.1 bzw. 2.2 vorgesehene Sensoranordnung, bestehend aus zwei stromdurchflossenen, mäanderförmig verlaufenden Leiterbahnen 7 und 8 sowie einer die Leiterbahnen 7 und 8 voneinander trennenden elektrisch nichtleitenden Zwischenschicht 9. Auf die Zeichenebene bezogen, liegt die nichtleitende Zwischenschicht 9 in der Zeichenebene, die Leiterbahn 7 in einer Ebene darüber (s. Fig. 2b) bzw. in einer Ebene davor (s. Fig. 2a), und die Leiterbahn 8 in einer Ebene darunter (s. Fig. 2b) bzw. in einer Ebene dahinter (s. Fig. 2a).

Die Positionierung der Leiterbahnen 7 und 8 in Relation zueinander und zur nichtleitenden Zwischenschicht 9 ist anhand des in Fig. 2b gezeigten Querschnitts durch die Zeichenebene verdeutlicht.

Diese Sensoranordnung ist innerhalb der Tore 2.1 , 2.2 räumlich so ausgedehnt, dass mindestens annähernd die gesamte Torfläche durchsetzt ist. Die Sensoranordnung ist mit einer Mess- und Steuereinrichtung 10 verbunden, von der eine bestimmte Spannung an jede Leiterbahn 7, 8 gelegt ist. Spannung und Strom in den Leiterbahnen 7, 8 definieren eine bestimmte elektrische Charakteristik der Sensoranordnung. Die Mess- und Steuereinrichtung 10 ist zugleich zur Kontrolle des durch die Leiterbahnen 7, 8 fließenden Stromes ausgebildet.

Trifft wie in den Figren 1 a und 1 b dargestellt Laserstrahlung 4.1 oder 4.2 auf das Tor 2.1, führt der damit verbundene Energieeintrag in die nichtleitende Zwischenschicht 9 und/oder in die Leiterbahnen 7, 8 zur Veränderung der elektrischen Charakteristik der Sensoranordnung, indem beispielsweise der Leitwert der Zwischenschicht 9 so beeinflusst wird, dass diese ihre isolierende Funktion verliert und es zu einem Spannungsdurchschlag zwischen den Leiterbahnen 7 und 8 kommt. Diese Veränderungen wird von der Mess- und Steuereinrichtung 10 registriert und unmittelbar Steuersignal zur Abschaltung der Laserstrahlungsquelle 6 ausgegeben. Der Energieeintrag kann auch dazu führen, dass eine der Leiterbahn 7 oder 8 oder auch beide Leiterbahnen 7, 8 und damit der Stromfluss unterbrochen wird, was von der Mess- und Steuereinrichtung 10 ebenfalls als Veränderung der elektrischen Charakteristik der Sensoranordnung wahrgenommen und das Steuersignal ausgegeben wird.

Die Leiterbahnen 7, 8 können in unterschiedlichen Ausgestaltungsvarianten in Reihe oder parallel geschaltet sein, so dass die Sensoranordnung entweder zwei getrennte Leiterbahnen 7, 8 oder nur eine stromdurchflossene Leiterbahn 7, 8 umfasst.

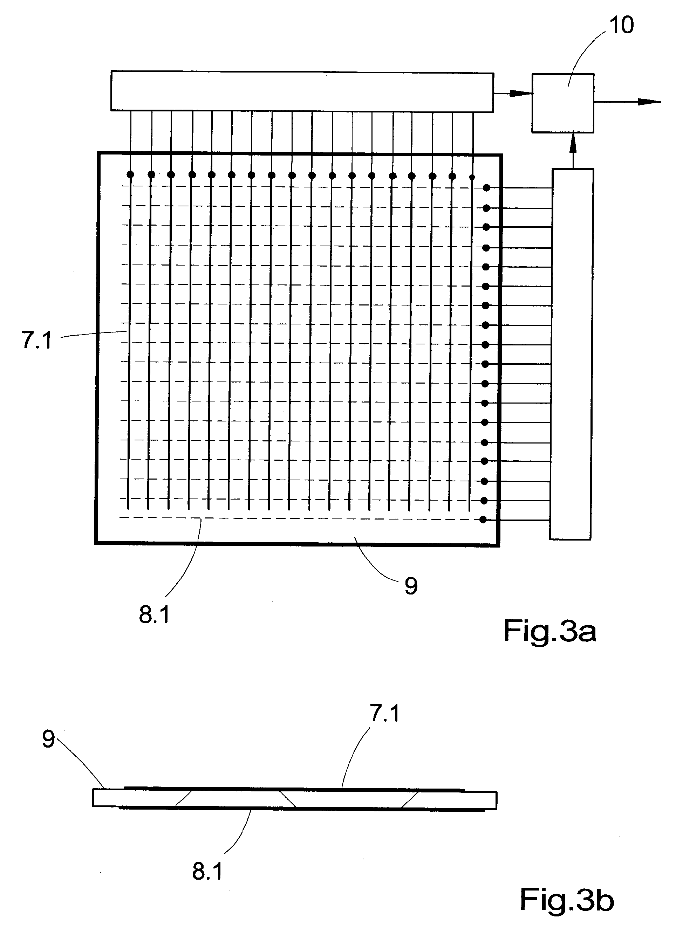

In einer alternativen Ausführungsform der Sensoranordnung, die in den Figuren 3a und 3b dargestellt ist, haben die Leiterbahnen 7.1, 8.1 die Form eines zweidimensionalen Diskretisierungsgitters. Aufgrund der gekreuzten Führung einer Vielzahl von Leiterbahnen 7.1, 8.1, wobei jeder Kreuzungspunkt einen bestimmten Ort des Tores 2.1, 2.2 definiert, ist es möglich, den Auftreffort der Laserstrahlung 4.1, 4.2 auf das Tor 2.1, 2.2 zu bestimmen und in Abhängigkeit davon das Steuersignal zur Veranlassung einer Richtungsänderung der Laserstrahlung 4.1, 4.2 und damit zur Gefahrenabwendung zu nutzen.

Die Sensibilität der Sensoranordnung ist durch die Auswahl der Materialeigenschaften und die Gestaltung der Abmessungen der Leitungsbahnen 7, 7.1, 8, 8.1 und der nichtleitenden Zwischenschicht 9 auf den bezüglich der Verhinderung des Durchdringens von Laserstrahlung 4.1, 4.2 durch das Tor 2.1, 2.2 maximal zulässigen Energieeintrag abstimmbar. Als Material für die Leiterbahnen 7, 7.1, 8, 8.1 kann Kupfer oder Aluminium, für die nichtleitende Zwischenschicht 9 Polypropylen oder Polycarbonat genutzt werden.

### Bezugszeichenliste

- 1: Werkstück
- 2.1, 2.2: Tor
- 3: Fertigungsraum
- 4: Laserstrahlung
- 4.1, 4.2: Laserstrahlung
- 5: Pfeile
- 6: Laserstrahlungsquelle
- 7, 7.1: Leiterbahn
- 8, 8.1: Leiterbahn
- 9: nichtleitende Zwischenschicht
- 10: Mess- und Steuereinrichtung

## Patentansprüche

1. Roll- oder faltbares Tor zum zeitweiligen Verschließen von begeh- oder befahrbaren Gebäudeöffnungen, **gekennzeichnet durch**
Mittel zum Verhindern des Durchdringens von Laserstrahlung (4.1, 4.2) **durch** das Tor (2.1, 2.2) und demzufolge **durch** eine mit dem Tor (2.1, 2.2) verschlossene Gebäudeöffnung.

2. Roll- oder faltbares Tor nach Anspruch 1, mit einer in das Tor (2.1, 2.2) integrierten Sensoranordnung, die zwecks Signalisierung auftreffender Laserstrahlung (4.1, 4.2) mit einer Mess- und Steuereinrichtung (10) verbunden und die Mess- und Steuereinrichtung (10) zur Ausgabe eines Steuersignals in Abhängigkeit von auftreffender Laserstrahlung (4.1, 4.2) ausgebildet ist.

3. Roll- oder faltbares Tor nach Anspruch 1 oder 2, bei dem die Verwendung des Steuersignals
zur Abschaltung der Laserstrahlungsquelle (6), oder Laserstrahlungsquelle (6) und Tor (2.1, 2.2) vorgesehen ist.

4. Roll- oder faltbares Tor nach Anspruch 2 oder 3, bei dem die Sensoranordnung
mehrere stromdurchflossene Leiterbahnen (7, 7.1, 8, 8.1) und eine die Leiterbahnen (7, 7.1, 8, 8.1) voneinander trennende dielektrische Zwischenschicht (9) umfasst, oder
aus einer stromdurchflossenen Leiterbahn (7, 8) besteht.

5. Roll- oder faltbares Tor nach einem der vorgenannten Ansprüche, bei dem
die Sensoranordnung zwecks Bestimmung des Auftreffortes der Laserstrahlung (4.1, 4.2) auf das Tor (2.1, 2.2) mehrere in Form eines zweidimensionalen Diskretisierungsgitters angeordnete Leiterbahnen (7.1, 8.1) aufweist, und
die Verwendung des Steuersignals zur Veranlassung einer Richtungsänderung der Laserstrahlung (4.1, 4.2) in Abhängigkeit vom Auftreffort vorgesehen ist.

6. Roll- oder faltbares Tor nach einem der Ansprüche 1, 2, 3, 4 oder 5, wobei
das Tor als Schnelllauftor ausgeführt ist.

7. Roll- oder faltbares Tor nach einem der Ansprüche 1, 2, 3, 4 oder 5, wobei
das Tor als Spiraltor ausgeführt ist.

8. Roll- oder faltbares Tor nach einem der Ansprüche 1, 2, 3, 4 oder 5, wobei
das Tor als Falthebetor ausgeführt ist.

9. Roll- oder faltbares Tor nach einem der Ansprüche 1, 2, 3, 4 oder 5, wobei
das Tor als Sektionaltor ausgeführt ist.

10. Roll- oder faltbares Tor nach einem der vorgenannten Ansprüche, bei dem
das Torblatt bzw. der Torbehang, also die vertikalen Segmente oder die horizontalen Segmente/Lamellen oder der flexible Behang, aus mehreren Materialschichten oder mehreren Bauteilschichten besteht, wobei wenigstens eine der Teilschichten eine Laserlicht streuende Schicht oder eine lichtabsorbierende Schicht ist.

11. Roll- oder faltbares Tor nach Anspruch 10, bei dem
die Laserlicht streuende Teilschicht ein gewirktes oder mehrlagiges Gewebe ist, vorzugsweise ein nicht brennbares textiles Flächengebilde, z.B. aus anorganischen oder/und organischen, nicht brennbaren Fasern besteht.

12. Roll- oder faltbares Tor nach Anspruch 10, bei dem
die lichtabsorbierende Schicht eine optische Filterschicht ist, welche z.B. am oder im Torblatt bzw. am oder im Torbehang so angeordnet, dass sie nicht die erste Schicht ist, auf welche die Laserstrahlung trifft.

13. Roll- oder faltbares Tor nach einem der Ansprüche 1 bis 12, **gekennzeichnet durch**
wenigstens ein in der Anmeldung offenbartes weiteres Merkmal.
